(19) Europäisches Patentamt
European Patent Office
Office européen des brevets

(11) **EP 4 124 893 A1**

(12) **EUROPEAN PATENT APPLICATION**

(43) Date of publication:
**01.02.2023 Bulletin 2023/05**

(21) Application number: **22186547.0**

(22) Date of filing: **22.07.2022**

(51) International Patent Classification (IPC):
**G02B 1/14** (2015.01)　　　**G02B 27/01** (2006.01)

(52) Cooperative Patent Classification (CPC):
**G02B 27/0101; G02B 1/14**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.07.2021　JP 2021126089**
**02.06.2022　JP 2022090387**

(71) Applicant: **Ricoh Company, Ltd.**
**Tokyo 143-8555 (JP)**

(72) Inventors:
• **HOSONO, Nobuto**
**Tokyo, 143-8555 (JP)**
• **WATANABE, Jun**
**Tokyo, 143-8555 (JP)**
• **SUGAYA, Takashi**
**Tokyo, 143-8555 (JP)**

(74) Representative: **J A Kemp LLP**
**80 Turnmill Street**
**London EC1M 5QU (GB)**

(54) **OPTICAL ELEMENT, LIGHT RECEIVING DEVICE, DISTANCE MEASUREMENT APPARATUS, MOBILE OBJECT, AND OPTICAL ELEMENT MANUFACTURING METHOD**

(57) An optical element (1) includes a resin base (10); and multiple films (20A) on a surface of the resin base (10), the multiple films (20A) including: a first film (21) having a first defect density; and a second film (23) over the first film, the second film (23) having a second defect density smaller than the first defect density of the first film (21).

FIG. 1

EP 4 124 893 A1

**Description**

BACKGROUND

Technical Field

Embodiments of the present disclosure relates to an optical element, a light receiving device, a distance measurement apparatus, a mobile object, and an optical element manufacturing method.

Related Art

As an optical element used in a light receiving device, a distance measurement apparatus on which the light receiving device is mounted, there is an optical element such as an optical lens. Optical elements are generally made of glass, quartz, or resin. Among them, optical elements of resin (i.e., resin optical element) are used in various fields because the resin optical element are lighter in weight, less prone to breaking, and is produced in large quantities at low cost, as compared with optical elements formed using glass or quartz.

In general, when an optical element is used as an optical lens mounted on a light receiving device such as a camera, the optical element is to have higher heat resistance, moisture resistance, and durability. In addition, the shape of the optical lens is complicated, and the aspect ratio of the optical lens is increased due to the widening of the angle. Resin is preferably used for such an optical lens, but easily affected by an external atmosphere.

Thus, a protection layer on a resin substrate (resin base) for the optical lens is required to form uniformly.

As an optical element, a plastic optical element is disclosed, for example, in Japanese Patent No. 5250851. The optical element includes a first film having gas barrier properties, provided in an optical path region of the surface and a second film having gas barrier properties having a larger malleability than the first film in a region other than the optical path of the surface are provided, that is, a film having gas barrier properties is provided on the entire surface.

The present inventors have found a trouble that yellowing occurs in a resin optical element if the resin optical element is not sufficiently protected by a protection film. In addition, depending on the types of the protection film, film lifting occurs in the protection film. Thus, there is room for study on the protection film of an optical element made of resin.

SUMMARY

In view of the above circumstances, embodiments of the present invention aim at providing an optical element, a light receiving element, a distance measurement apparatus, a mobile object, and an optical element manufacturing method that prevents a resin base from yellowing and film lifting between the resin base and a film on the surface of the resin base.

An optical element (1) includes: a resin base (10); and multiple films (20A) on a surface of the resin base (10), the multiple films (20A) including: a first film (21) having a first defect density; and a second film (23) over the first film, the second film (23) having a second defect density smaller than the first defect density of the first film (21).

A light receiving device (120) includes: the optical element (1); and a light receiving element (122) to receive light having passed through or reflected from the optical element (1).

A distance measurement apparatus (100) includes: a light projection unit (110) including a light source (111) to emit light, the light projection unit (110) to project the light to an object (102); a detection unit (120) including a light receiving element (122) to receive reflection light reflected from the object (102); and distance measurement circuitry (123) to calculate a distance to the object (102) based on signals from the light projection unit (110) and the detection unit (120). Herein, at least one of the light projection unit (110) and the detection unit (120) includes the optical element (1).

A mobile object (101) includes the light receiving device (120).

An optical element manufacturing method includes: forming a first film (21) having a first defect density on a resin base (10); and forming a second film (23) having a second defect density lower than the first defect density of the first film (21) after forming the first film (21).

According to embodiments of the present invention, the optical element prevents yellowing of the resin base and the film lifting on the surface of the resin base.

BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

FIG. 1 is a plan view of an optical element according to the present embodiment:
FIG. 2 is a cross-sectional view taken along the line A-A of the optical element in FIG. 1;
FIG. 3A is a cross-sectional view of a layer structure of multiple films in FIG. 2;
FIG. 3B is a cross-sectional view of another layer structure of the multiple films in FIG. 2;
FIG. 4 is a cross-sectional view of a layer structure of the film in FIG. 2;
FIG. 5 is a diagram of the resin base entirely covered with a second protection layer;
FIG. 6A is a cross-sectional view of another example of an optical element;
FIG. 6B is a cross-sectional view of another example of an optical element;
FIG. 6C is a cross-sectional view of another example of an optical element;
FIG. 6D is a cross-sectional view of another example of an optical element;
FIG. 6E is a cross-sectional view of another example of an optical element;
FIG. 7 is a diagram of a vehicle provided with a laser imaging detection and ranging (LiDAR) device;
FIG. 8 is a diagram of the LiDAR device;
FIG. 9 is a diagram of a configuration of the distance measurement apparatus; and
FIG. 10 is a diagram of an imaging device.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described referring to the drawings.
Like reference signs are applied to identical or corresponding components throughout the drawings, and redundant description thereof may be omitted. The embodiments described below are examples of apparatuses for embodying the technical idea of the present disclosure, and the present disclosure is not limited to the embodiments described below. Unless otherwise specified, shapes of components, relative arrangements thereof, and values of parameters described below are not intended to limit the scope of the present invention but are intended to exemplify the scope of the present invention. The relative positions of the elements illustrated in the drawings may be exaggerated for purpose of clear illustration.

Hereinafter, embodiments of the present invention will be described in detail. In order to facilitate understanding of the description, the same components are denoted by the same reference number in the drawings, and redundant descriptions are omitted. Further, the scale of each component in the drawings may be different from the actual scale.

Optical Element

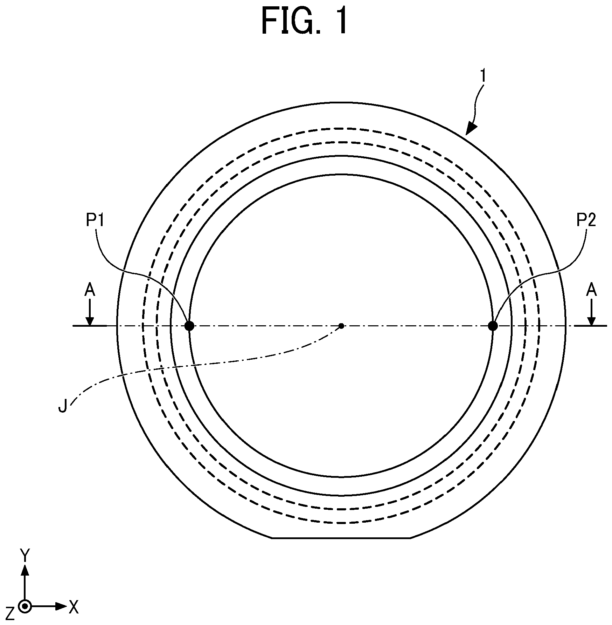

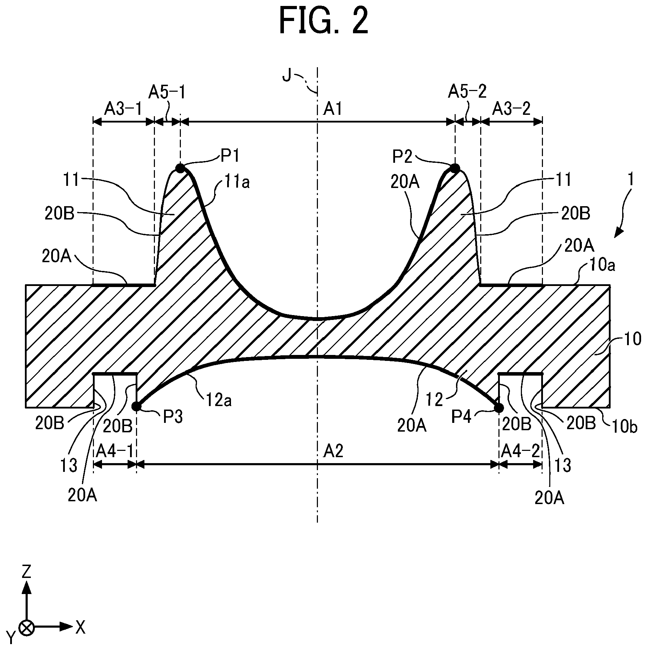

An optical element according to the present embodiment will be described. In the present embodiment, the optical element is an optical lens. FIG. 1 is a plan view of an optical element according to the present embodiment, and FIG. 2 is a cross-sectional view taken along the line A-A in FIG. 1. In FIGS. 1 and 2, a three-dimensional orthogonal coordinate system (i.e., coordinate system) of three axes (X-axis, Y-axis, and Z-axis) is used. In the coordinate system, the Z-axis is parallel to the center axis J and the direction of thickness of the lens, and the X-axis and the Y-axis are in a plane perpendicular to the center axis J (i.e., X-Y plane) of the optical element (e.g., lens). A positive direction of each axis is indicated by an arrow.

As illustrated in FIGS. 1 and 2, the optical element 1 according to the present embodiment includes a resin base 10 and multiple films 20A.

As illustrated in FIG. 1, the resin base 10 is substantially circular in a plan view. The resin base 10 may have, in a plan view, a cutout portion (i.e., orientation flat) which is linearly cut in a part of an outer shape thereof and serves as a mark for determining a direction.

As illustrated in FIG. 2, the resin base 10 has a first protruding portion 11 on a top surface 10a. The resin base 10 has a curved surface 11a of a concave surface in a region A1 between a vertex P1 and a vertex P2 of the first protruding portion 11.

The resin base 10 has a second protruding portion 12 and a groove portion 13 formed along a circumferential direction of the second protruding portion 12 of a bottom surface 10b. The resin base 10 has a curved surface 12a including a concave surface in a region A2 between a vertex P3 and a vertex P4 of the second protruding portion 12.

The shape of the resin base 10 may be appropriately designed depending on the application of the optical element 1. The shape and the size of the first protruding portion 11 and the second protruding portion 12 may be appropriately designed depending on the application of the optical element 1. The resin base may not have the first protruding portion 11 and the second protruding portion 12.

Since the resin base 10 is used for the optical element 1, the resin for the resin base 10 preferably has transparency to visible light.

Specifically, when the resin base 10 has transparency to visible light, the visible light (i.e., light having wavelengths of 380 nm to 780 nm) emitted from the outside of the resin base 10 passes through the resin base 10. The transmittance of the visible light through the resin base 10 is preferably 60% or higher, more preferably 75% or larger, and still more preferably 90% or higher. The transmittance of the visible light is specified as a mean value of transmittance at respective wavelengths when measured at wavelengths of 380 nm to 780 nm using a spectrophotometer.

Specific examples of the resin used for the resin base 10 include, but are not limited to, polyester resins, cellulose resins, polyolefin resins, acrylic resins, styrene resins, polycarbonate (PC), vinyl chloride resins, amide resins, imide resins, sulfone resins, polyether sulfone resins, polyether ether ketone resins, polyphenylene sulfide resins, vinyl alcohol resins, vinylidene chloride resins, vinyl butyral resins, arylate resins, polyoxymethylene resins, and epoxy resins. The resin base 10 may contain a single resin or two or more resins among resins described above.

Specific examples of the polyester resins include, but are not limited to, polyethylene terephthalate (PET), polyethylene naphthalate (PEN), polybutylene terephthalate (PBT), and polycyclohexylenedimethylene terephthalate (PCT).

Specific examples of the cellulose resins include, but are not limited to, diacetyl cellulose and triacetyl cellulose (TAC).

Specific examples of the polyolefin resin include, but are not limited to, polyethylene (PE), polypropylene (PP), polymethylpentene, a polyolefin having a cyclo or a norbornene structure, a cycloolefin copolymer, and an ethylene-propylene copolymer. Specific examples of polyolefin-based resins include polymethylpentene (TPX (registered trademark) manufactured by Mitsui Petrochemical Industries, Ltd.), cycloolefin copolymer (Apel APL3500 (APO) manufactured by Mitsui Petrochemical Industries, Ltd.), cycloolefin polymer (COP) (ZEONEX (registered trademark) manufactured by Zeon Co., Ltd.), and ARTON resins (ARTON manufactured by Japan Synthetic Rubber Co., Ltd.). Since these materials generally have a lower heat resistance (i.e., a low resistance to higher temperatures), these materials are handled in a manufacturing process at 160°C or lower. Thus, these materials are suitably used in manufacturing at low temperatures of 160°C or lower.

Specific examples of the acrylic resins include, but are not limited to, polymethyl methacrylate (PMMA).

Specific examples of the styrene resins include, but are not limited to, polystyrene (PS) and acrylonitrile-styrene copolymer (AS resin).

Specific examples of the vinyl resins include, but are not limited to, polyvinyl chloride (PVA).

Specific examples of the amide resins include, but are not limited to, nylon and aromatic polyamide.

As illustrated in FIG. 2, the resin base 10 includes a region A1, a region A2, a region A3-1, a region A3-2, a region A4-1, a region A4-2, and a region A5-1, and a region A5-2.

The region A1 corresponds to a region in which the curved surface 11a is formed, that is, the curved surface between the vertices P1 and P2. The region A2 corresponds to a region formed in the curved surface 12a, that is, the curved surface between the vertices P3 and P4. The region A1 and the region A2 may be changed appropriately depending on the design of the resin base 10.

Preferably, the region A1 and the region A2 include an effective region of the optical element 1. Herein, the effective region is a region on which light is incident or reflected. The incident light passes through the effective region.

The regions A3-1 and A3-2 are located away from the center axis J of the optical element 1 and outside of the effective region of the optical element 1. The regions A3-1 and A3-2 are formed on the flat surface of the optical element 1 and are less likely to be optically affected.

The regions A4-1 and A4-2 are located away from the center axis J of the optical element 1 and outside of the effective region of the optical element 1. The regions A4-1 and A4-2 are formed on the bottom surface of the groove portion 13 and are less likely to be optically affected.

The regions A5-1 and A5-2 are located away from the center axis J of the optical element 1 and outside of the effective region of the optical element 1. The regions A5-1 and A5-2 are formed on the outer peripheral surface of the first protruding portion 11 and are located between the region A1 and the region A3-1, and between the region A1 and the region A3-2.

As illustrated in FIG. 2, the multiple films 20 are provided on the surface of the resin base 10. The multiple films 20 include a first protection layer 21 corresponding to a first film and a second protection layer 23 corresponding to a second film.

The first protection layer 21 includes defects more than the second protection layer 23. The first protection layer 21 has a function of absorbing elements and gas components released from the resin base 10 due to the defects.

Since the second protection layer 23 has defects less than the first protection layer 21, that is, the second protection layer 23 is a higher-quality film, the second protection layer 23 has a function of preventing elements and gas components that deteriorate the resin base 10 (e.g., yellowing the resin) from infiltrating from the outside of the resin base 10.

Herein, the optical element 1 includes multiple films 20A and a film 20B.

The resin base 10 includes a first region in which the multiple films 20A are formed and a second region in which the film 20B is formed. In FIG. 2, in order to clarify a difference between the multiple films 20A and the film 20B, a region in which the multiple films 20A is formed is depicted by a bold line.

As illustrated in FIG. 2, the multiple films 20A are provided in the region A1, the region A2, the regions A3-1 and A3-2, and the regions A4-1 and A4-2 on the surface of the resin base 10. In the present embodiment, the region A1, the region A2, the regions A3-1 and A3-2, and the regions A4-1 and A4-2 correspond to the first region.

As illustrated in FIG. 2, the film 20B is provided in the regions A5-1 and A5-2 of the surface of the resin base 10, that is, in the outer peripheral surface of the first protruding portion 11, the side surfaces of the groove portion 13, and the outer periphery of the resin base 10 and the vicinity thereof.

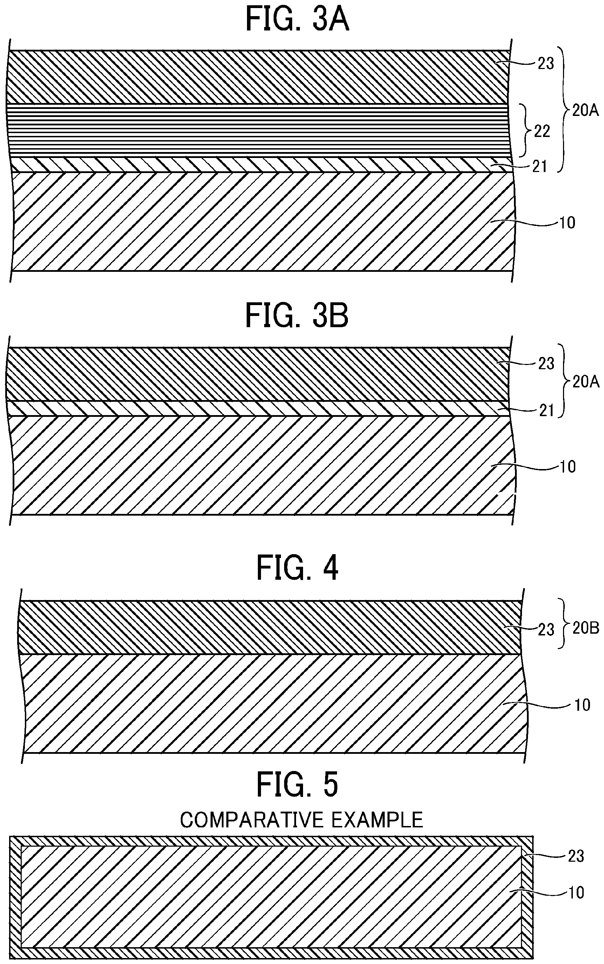

FIG. 3A is a cross-sectional view of a layer structure of the multiple films 20A illustrated in FIG. 2. The resin base 10 is curved, and the multiple films 20A is also curved. However, the resin base 10 is illustrated as being flat in FIG. 3 for the sake of convenience.

As illustrated in FIG. 3A, the multiple films 20A forms a laminated film including a first protection layer 21 (a first film), an antireflection layer 22, and a second protection layer 23 (a second film) placed in this order over the resin base 10. In other words, multiple films 20A further include the antireflection layer 22 at least between the first film (the first protection layer 21) and the second film (the second protection layer 23). The multiple films 20A may not include the antireflection layer 22. The multiple films 20A may be composed of a first protection layer 21 and a second protection layer 23 placed in this order over the resin base 10. As illustrated in FIG. 3B, the multiple films 20A may be a laminated film including a first protection layer 21 and a second protection layer 23 placed in this order over the resin base 10. The antireflection layer 22 also may be partially provided on the first protection layer 23.

FIG. 4 is a cross-sectional view of a layer structure of the film 20B. As illustrated in FIG. 4, the film 20B is a laminated film composed of the second protection layer 23 without the first protection layer 21 and the antireflection layer 22 of the multiple films 20A. The film 20B is not limited to a single film (i.e., single layer), and may include other films laminated in addition to the second protection layer 23.

The first protection layer 21 (FIG. 3A) is provided in the region A1, the region A2, the regions A3-1 and A3-2, and the regions A4-1 and A4-2 on the surface of the resin base 10 and at the bottom surface of the groove portion 13 (FIG. 2). Since the first protection layer 21 is provided on the surfaces of these regions on the resin base 10, the first protection layer 21 prevents the release of the gas components contained in the resin base 10 and the antireflection layer 22. The gas components contained in the resin base 10 is caused by, for example, a manufacturing process of the resin base 10. Thus, in the region in which the first protection layer 21 is formed, the first protection layer 21 prevents the gas components released from the resin base 10 and the antireflection layer 22 from accumulating between these layers (i.e., between the resin base 10 and the first protection layer 21; the first protection layer 21 and the antireflection layer 22; and the antireflections layer 22 and the second protection layer 23).

Most portions of the gas components contained in the resin base 10 are released at the stage of forming the first protection layer 21 on the surface of the resin base 10, but some portions of the gas components remain (i.e., a remaining portion of the gas components). The remaining portion of the gas is partly released from the resin base 10 when the optical element 1 is used. The first protection layer 21 absorbs a portion of the remainder of the gas components in the resin base 10, and thus prevents the release of the gas components from the resin base 10 to the outside.

The first protection layer 21 (FIG. 3A) may be provided in a part of the surface of the resin base 10, such as in the region A1, the region A2, the regions A3-1 and A3-2, and the bottom surface of the groove portion 13 of the regions A4-1 and A4-2, and also provided in the side surfaces of the regions A4-1 and A4-2 of the groove portion 13 and the regions A5-1 and A5-2 (FIG. 2).

Preferably, the first protection layer 21 may be provided in at least the effective region of the optical element 1 and may not be provided on the outer periphery or in the vicinity of the outer periphery of the resin base 10 in a plan view. The outer periphery and the vicinity of the outer periphery include the regions A3-1 and A3-2, the regions A4-1 and A4-2, and a region of the resin base 10 outside the groove portion 13 (FIG. 2). The first protection layer 21 is not provided in the vicinity of the resin base 10 because the resin base 10 has its vicinity fixed to a holding member for holding the resin base 10, a light receiving device, or a distance measurement apparatus, on which the resin base 10 is mounted. In other words, the first protection layer 21 fails to work effectively, particularly in the vicinity of the resin base 10.

A specific example of the material forming the first protection layer 21 includes, but is not limited to, alumina.

The thickness of the first protection layer 21 is appropriately designed, and is preferably 10 nm to 40 nm, more preferably 15 nm to 35 nm, and still more preferably 20 nm to 30 nm. When the thickness of the first protection layer 21 is within the preferable range described above, cracks in the first protection layer 21 are less likely to occur, and the first protection layer 21 works properly.

In the present specification, the thickness of the first protection layer 21 refers to a length in a direction perpendicular a surface at a position of a predetermined surface of the first protection layer 21. For example, the thickness of the first protection layer 21 is measured at any position in a cross section of the first protection layer 21. When the thickness of the first protection layer 21 is measured at multiple positions in the cross section of the first protection layer 21, the average value of the thicknesses at the multiple positions may be used. The thicknesses of the antireflection layer 22 and the second protection layer 23 are also measured in the same manner as the thickness of the first protection layer 21.

Specific methods forming the first protection layer 21 are, but are not limited to, chemical vapor deposition (CVD), physical vapor deposition (PVD), and sputtering, which are typical film forming methods. If atomic layer deposition (ALD) is used for film forming, a film having extremely less defects is formed. Thus, preferably, the first protection layer 21 having a larger defect density is formed by any one of the CVD, the PVD, and the sputtering.

As described above, the defect density of the first protection layer 21 is higher than that of the second protection layer 23. Since the first protection layer 21 has a defect density larger than the second protection layer 23, a portion of the second protection layer 23 or the antireflection layer 22 infiltrates the surface of the first protection layer due to larger defect density. In addition to the effect that absorbs the elements or the gas components released from the resin base 10, adhesion between these films increases as another effect.

The defect density may be measured by a scanning electron microscope (SEM), an optical microscope (OM), or a transmission electron microscope (TEM). The defect density is obtained by calculating the number of voids present in the unit area of the cross section of the first protection layer 21 according to an image obtained by the SEM, the OM, or the TEM. Herein, the defect may be a point defect, a line defect, or a plane defect.

As illustrated in FIG. 2, the first protection layer 21 (e.g., in FIG. 3A) partially covers the surfaces of the resin base 10 (the region A1, the region A2, the regions A3-1 and A3-2, and the regions A4-1 and A4-2), but does not cover the entire surface of the resin base 10.

In the present embodiment, as illustrated in FIG. 2, the resin base 10 has a shape in which the outer peripheral of the first protruding portion 11 of the resin base 10 rises. Because of the shape such as the first protruding portion 11, when the first protection layer 21 is formed on the surface of the resin base 10, the first protection layer 21 is formed on only parts of the resin base 10 (i.e., the region A1, the region A2, the regions A3-1 and A3-2, and the regions A4-1 and A4-2) without using a mask.

In addition, the first protection layer 21 also has a function of preventing the gas components containing oxygen generated from the antireflection layer 22 from infiltrating the resin base 10 and deteriorating the resin base 10. Thus, the first protection layer 21 is preferably formed so as to cover at least the region in which the antireflection layer 22 is formed.

As illustrated in FIG. 3A, the antireflection layer 22 may be provided between the first protection layer 21 and the second protection layer 23. The antireflection layer 22 is provided on a part of the surface of the resin base 10 (i.e., the region A1, the region A2, the regions A3-1 and A3-2, and the regions A4-1 and A4-2 in FIG. 2) as well as the first protection layer 21. The antireflection layer 22 may not entirely cover the surface of the resin base 10 as well as the first protection layer 21. In FIG. 2, the regions in which the first protection layer 21 and the antireflection layer 22 are formed are same, but the region in which the antireflection layer 22 is formed may be included in the region in which the first protection layer 21 is formed.

The antireflection layer 22 includes multiple films having different refractive indices, and the multiple films include different elements as a main component and are periodically laminated. A multi-layer film is typically used for the antireflection layer 22. The multi-layer film includes alternate layers of higher-refractive index layers and lower-refractive index layers over the first protection layer 21.

The antireflection layer 22 may be formed by laminating multiple cycles of a laminated structure in which a higher-refractive index layer and a lower-refractive index layer are laminated in this order over the first protection layer 21 as one cycle, or may be formed by laminating multiple cycles of a laminated structure in which a lower-refractive index layer and a higher-refractive index layer are laminated in this order over the first protection layer 21 as one cycle. When a layer composed of $SiO_2$ is used for the lower-refractive index, oxygen is likely to release from the layer (i.e., oxygen releasing). In such a layer structure, preferably, a higher-refractive index layer is provided on the first protection layer 21 in the antireflection layer 22. As a result, oxygen releasing is reduced.

Specific examples of the higher-refractive index layer include, but are not limited to, $Al_2O3$, ZrOx (x is 1.5 to 2), TiOx (x is 1 to 2), TaOx (x is 2 to 2.5), NbOx (x is 2 to 2.5), $HfO_2$, or $CeF_3$. Preferably, $ZrO_x$ is ZrO or $ZrO_2$, $TiO_x$ is

$TiO_2$, $Ti_3O_5$, or $Ti_2O_5$ , $TaO_x$ is $Ta_2O_5$, $NbO_x$ is $Nb_2O_5$. The metal oxide described above may not have a stoichiometric composition as long as the composition ratio of oxygen is within the range of x. Preferably, the higher-refractive index layer is composed of a single layer or a mixed layer including two or more of the materials selected from the components described above. The materials of the multiple higher-refractive index layers laminated in the antireflection layer 22 may be the same or different. Since the higher-refractive index layer includes at least one of these materials, the antireflection layer 22 achieves a lower reflectance of light.

The lower-refractive index layer is preferably formed of a single layer of $SiO_2$, $MgF_2$, $CeO_2$, ZnS, or a mixed layer including any one of these materials. As the lower-refractive index layer, the materials of the multiple lower-refractive index layers laminated on the antireflection layer 22 may be the same or different.

The antireflection layer 22 includes multiple higher-refractive index layers and multiple lower-refractive index layers, but the film thicknesses of the higher-refractive index layers or the film thicknesses of the lower-refractive index layers may be the same or different.

The thickness and the period (cycle) of each layer forming the antireflection layer 22 are appropriately selected depending on the film material to be used, the reflectance of light, and the wavelength of light for the antireflection layer 22.

Each layer forming the antireflection layer 22 is formed so as to have a desired film thickness by using a general film forming method such as vapor deposition or sputtering. Examples of sputtering include, but are not limited to, magnetron sputtering and ion beam sputtering.

As illustrated in FIG. 3-1, the second protection layer 23 is provided on the entire surface including at least the resin base 10 and the first protection layer 21. Thus, the second protection layer 23 is provided on the surface of the resin base 10 not covered with the first protection layer 21 and the surface of the first protection layer 21.

The second protection layer 23 preferably includes at least one of $Al_2O3$, $HfO_2$, $SiO_x$, $SiN_x$, and $TiO_x$, and more preferably includes $Al_2O_3$. In other words, the second film (the second protection layer 23) contains at least one member selected from the group consisting of $Al_2O3$, $HfO_2$, $SiO_2$, and SiN.

The second protection layer 23 preferably has a thickness of 10 nm to 40 nm, more preferably 15 nm to 35 nm, and still more preferably 20 nm to 30 nm. When the resin base 10 excluding the second protection layer 23 is put in an environment of 120°C for 1,000 hours, the transmittance loss exceeds 10%. By contrast, when the second protection layer 23 having the thickness within the preferable range described above, the transmittance loss is 8% or smaller in the same environment (i.e., 120°C , 1,000 hours). In particular, in the case where the second protection layer 23 is formed by the ALD described later, when the second protection layer 23 having the thickness of 20 nm to 40 nm is put in the same environment (i.e., 120°C, 1,000 hours), the transmission loss is 0.5%.

The film thickness uniformity of the second protection layer 23 is given by the formula (1) below, and is preferably 10% or smaller, more preferably 8% or smaller, and still more preferably 6% or smaller. When the film thickness uniformity of the second protection layer 23 is 10% or smaller, the second protection layer 23 covers the entire resin base 10 with a substantially uniform film thickness, and the second protection layer 23 works properly.

$$(1) \text{ Film thickness uniformity (\%)} = (\text{maximum film thickness} - \text{minimum film thickness}) \, / \, (\text{average film thickness} \times 2) \times 100$$

When the average the film thickness in the formula (1) is calculated by the formula (2) below, the formula (1) is also defined by the formula (3) below.

$$(2) \text{ Average film thickness} = (\text{maximum film thickness} + \text{minimum film thickness}) \, / \, 2$$

$$(3) \text{ Film thickness uniformity (\%)} = (\text{maximum film thickness} - \text{minimum film thickness}) \, / \, (\text{maximum film thickness} + \text{minimum film thickness}) \times 100$$

Since the second protection layer 23 is likely to be formed on parts of the surfaces of the resin base 10, such as the region A1, the region A2, the regions A3-1 and A3-2, and the regions A4-1 and A4-2, the second protection layer 23 reaches the maximum thickness in these regions. By contrast, since the regions A5-1 and A5-2 and the side surfaces of the grooves portion 13 are unlikely to be formed in regions in which the inclination of the resin base 10 is high, the second protection layer 23 reaches the minimum thickness in these regions. Preferably, the difference in the film thickness between the second protection layer 23 formed on a part of the resin base 10 (i.e., the region A1, the region A2, the regions A3-1 and A3-2, and the regions A4-1 and A4-2) and the second protection layer 23 formed on the regions A5-1 and A5-2 and the side surfaces of the groove portion 13 is 10% or smaller.

Although, the second protection layer 23 is formed by a typical film forming method, preferably, the second protection layer 23 is formed by the ALD. The ALD is one of vacuum film forming methods forming a thin film for each atomic layer by using self-controllability of atoms on the surface of the antireflection layer 22, which is a target deposition layer. The ALD forms a thin film having fewer defects than the other vapor deposition methods (CVD or PVD) and uniformly covers the surface of the antireflection layer 22.

The ALD is more preferable than the CVD in forming the second protection layer 23. Advantages of the ALD will be described. In general, when the second protection layer 23 is formed by the CVD, the second protection layer 23 is likely to suffer from many defects in the layer. In addition, since the film forming speed of the CVD is higher (e.g., 10 nm/s to 15 nm/s), the film thickness, which affects the optical characteristic, becomes thicker. Thus, the film thickness of the second protection layer 23 to be dozens of nanometers is hard to control in film forming. Since the ALD forms a film for each atomic layer, the film forming speed of the ALD is lower than that of the CVD, cracks in the second protection layer 23 and particle adhesion on the surface or inside of the second protection layer 23 are less likely to occur, and film defects are less likely to occur as compared to the CVD In addition, although a film grown at higher temperature is generally considered to be advantageous in resistance, the ALD forms a higher-quality film at lower temperature in vapor deposition and is a suitable film forming method for a resin base having a limited heat resistance.

In addition, the coverage of the second protection layer 23 formed by the ALD is higher than that by the CVD, and even if the resin base 10 has a conformal shape, the first protection layer 21 or the antireflection layer 22 are formed having a substantially uniform thickness so as to conform to the shape of the resin base 10. When the second protection layer 23 covers a variant shape such as different materials such as the first protection layer 21 and the antireflection layer 22, the film thickness of the side wall portions of the resin base 10 is likely to be thinner or seam is likely to occur. Thus, forming the second protection layer 23 by the CVD has a difficulty in controlling the film thickness to dozens of nanometers. By contrast, since the ALD is a film forming method using surface reaction, even if the film thickness is 1 nm, the first protection layer 21 and the antireflection layer 22 are reliably covered, and the thickness of the second protection layer 23 on the surfaces of the region A and the side wall portions of the resin base 10 is substantially uniform.

Since the second protection layer 23 is formed by the ALD, the entire resin base 10 is substantially uniformly covered. Thus, infiltration of moisture and oxygen from the outside is prevented, and yellowing of the resin base 10 (deterioration in transmittance of the resin) is prevented.

In the present embodiment, the second protection layer 23 is preferably made of alumina formed by the ALD and preferably has the thickness of 20 nm.

When the second protection layer 23 is formed by the ALD, the second protection layer 23 is formed using general film formation conditions. The film formation conditions of the ALD will be described.

When the second protection layer 23 contains $Al_2O_3$, it is preferable to use an aluminum compound. The aluminum compound may be any vaporable component containing aluminum. Specific examples of the aluminum compound include, but are not limited to, trimethylaluminum (TMA), triethylaluminum (TEA), and trichloroaluminum.

The oxidant may be any material capable of oxidizing the aluminum compound, and for example, water vapor $H_2O$ is used.

The reaction temperature is preferably 140°C or lower.

When the second protection layer 23 includes $Al_2O_3$, the characteristics of the second protection layer 23 greatly depend on the $Al_2O_3$. Generally, a refractive index of an $Al_2O_3$ film formed by the ALD is lower than that of a bulk $Al_2O3$, though the refractive index depends on the film formation conditions of the ALD. The second protection layer 23 containing $Al_2O_3$ preferably has a refractive index of 1.630 or larger and 1.670 or smaller, and more preferably 1.630 or larger and 1.660 or smaller with respect to light having a wavelength of 550 nm.

When the first protection layer 21 and the second protection layer 23 are composed of the same compound, the defect density of the second protection layer 23 is lower than that of the first protection layer 21, that is, the density of the second protection layer 23 is higher than that of the first protection layer 21. Generally, the higher density causes the higher refractive index. When the first protection layer 21 and the second protection layer 23 are composed of the same compound, preferably, the refractive index of the second protection layer 23 is higher than that of the first protection layer 21. For example, according to a measurement result by ellipsometry, the refractive index of the $Al_2O_3$ film as the first protection layer 21 formed by vapor deposition was about 1.595 to 1.610 with respect to light having a wavelength of 550 nm. By contrast, the refractive index of the $Al_2O_3$ film as the second protection layer 23 formed by the ALD was about 1.649 with respect to light having a wavelength of 550 nm.

Herein, an effect of the multiple films 20 including the first protection layer 21 and the second protection layer 23 will be described. When only the first protection layer 21 is provided as the protection film of the resin base 10, yellowing occurs in the resin base 10 depending on the environment in which the optical element is placed. Since the first protection layer 21 has defects, only the first protection layer 21 may not entirely block the influence of the external atmosphere, and external moisture or oxygen may affect the resin base 10. In addition, when the resin base 10 has unevenness in its shape (e.g., a step portion), the film formed on the resin base 10 has a difficulty in uniformly covering the step portion by a general film forming method. As a comparative example, when only the second protection layer 23 is provided as the protection film of the resin base 10 as illustrated in FIG. 5, film lifting may occur at the interface between the antireflection layer 22 and the second protection layer 23 or the interface between the resin base 10 and the second protection layer 23. According to consideration, since the second protection layer 23 has lower defect, the inside of the second protection layer 23 is in a substantially completely airtight state, and elements and gas components released from the resin base 10 and the antireflection layer 22 remain inside the second protection layer 23.

If film lifting occurs in the effective region such as the region A1 and the region A2 of the optical element 1, the optical element 1 may not work properly as an optical element.

In the present embodiment, the first protection layer 21 is provided so as to cover a part of the surface of the resin base 10 including at least the effective regions of the optical element 1, because film forming methods such as the CVD, the PVD, and sputtering have a difficulty in covering the entire surface of the resin base 10 due to characteristics as a film forming method. However, if the region in which the first protection layer 21 is not provided is out of the effective region, the optical element has less influence if film lifting occurs.

Yellowing of the resin base 10 occurs in regions in which the protection layer is not provided such as the first protection layer 21 and the second protection layer 23, or a portion of the protective layer having defects, and further spreads in the resin base 10. Preferably, the second protection layer 23 may be provided on at least the effective region of the optical element 1 and a region adjacent to the effective area, more preferably the entire resin base 10 to block moisture or oxygen from the outside.

As a comparative example, there is a method in which the effective region of the resin base 10 is covered with a resin layer, and a part of a region (i.e., non-effective region) other than the effective region of the resin base 10 is covered with a metal film to cover the entire resin base (see Japanese Patent No. 5250851). In the comparative example, a mask is used not to form the metal film on the effective region in manufacturing process. The manufacturing process using the mask including forming the mask itself is additional and causes cost increase. In the present embodiment, since the entire surface of the resin base 10 of the optical element 1 is covered with the second protection layer 23, the manufacturing cost is cut without increasing a process of forming a mask.

A manufacturing method of the optical element 1 according to the present embodiment includes the multiple films 20 including the first protection layer 21 as a first film and the second protection layer 23 as a second film. The manufacturing method is not limited to the optical element 1 and may be used for optical elements generally used.

Specifically, the manufacturing method of the optical element 1 includes a first film forming process for the first protection layer 21 and a second film forming process for the second protection layer 23 having a lower defect density than the first protection layer 21 on the surface of the resin base 10 after the first film forming process, and may include other processes.

Specifically, the manufacturing method of the optical element 1 includes a first film forming process for the first protection layer 21 and a second film forming process for the second protection layer 23 having a lower defect density than the first protection layer 21 on the surface of the resin base 10 after the first film forming process, and may include other processes.

The optical element 1 is manufactured by including the first film forming process and the second film forming process.

As described above, the optical element 1 according to the present embodiment includes the resin base 10 and the multiple films 20, and the multiple films 20 include the first protection layer 21 and the second protection layer 23. The first protection layer 21 has a relatively higher defect density (i.e., first defect density), and the second protection layer 23 has a relatively lower defect density (i.e., second defect density). Since the optical element 1 includes the second protection layer 23, the optical element 1 is less likely to contact with mainly external oxygen or moisture. In addition, since the optical element 1 includes the first protection layer 21 on the surface of the resin base 10, the first protection layer 21 absorbs, for example, gas components released from the resin base 10 or the antireflection layer 22 and remaining gas components between the resin base 10 and the second protection layer 23 is reduced. Thus, in the optical element 1, yellowing in the resin base 10 is less likely to occur, and film lifting between the resin base 10 and the multiple films 20 is less likely to occur. Thus, since the deterioration of the optical element 1 is prevented while using the optical element 1, the reliability is improved over a long period.

In addition, in the optical element 1, since the second protection layer 23 is easily adhered to the first protection layer 21 by making the defect density of the first protection layer 21 larger than the defect density of the second protection layer 23, the second protection layer 23 is stably provided on the resin base 10 via the first protection layer 21 even when the adhesion between the resin base 10 and the second protection layer 23 is lower.

In the optical element 1, the first protection layer 21 is provided on the first region, and the second protection layer 23 may be provided on the first region and the second region. In the optical element 1, the first protection layer 21 and the second protection layer 23 may be provided on parts of the first region and the second region. In the optical element 1, yellowing in the resin base 10 is less likely to occur, and film lifting between the resin base 10 and the multiple films 20 is less likely to occur. Thus, the optical element 1 works stably while maintaining optical characteristics.

In the optical element 1, the first region is composed of multiple regions including the region A1, the region A2, the regions A3-1 and A3-2, and the regions A4-1 and A4-2. Since the optical element 1 forms the first region on the multiple regions of the resin base 10, film lifting between the resin base 10 and the multiple films 20 is less likely to occur, and the optical element 1 works stably while maintaining optical characteristics.

The optical element 1 may include an antireflection layer 22 between the first protection layer 21 and the second protection layer 23. Since the optical element 1 prevents the resin base 10 from yellowing, the optical element 1 accepts light incident on the region A1 and the region A2 or reflects the incident light. Thus, the optical element 1 works stably while maintaining optical characteristics.

In the optical element 1, the second protection layer 23 may contain at least one of $Al_2O3$, $HfO_2$, $SiO_2$, SiN, and $TiO_x$. Accordingly, since the second protection layer 23 appropriately prevent infiltration of moisture or oxygen from the outside into the inside, the optical element 1 further prevents the resin base 10 yellowing.

In the optical element 1, the second protection layer 23 may have a thickness of 10 nm to 40 nm. Accordingly, since the second protection layer 23 maintains the transmittance loss of light at lower level in an environment of 120°C for 1,000 hours, the second protection layer 23 prevents air and oxygen from the outside from infiltrating. Thus, since in the optical element 1, the second protection layer 23 prevents moisture or oxygen from the outside from infiltrating inside, yellowing of the resin base 10 is further reliably reduced.

The optical element 1 may include the second protection layer 23 including alumina having a refraction index of 1.630 to 1.670 with respect to light having a wavelength of 550 nm. Accordingly, the optical element 1 prevents moisture or oxygen from the outside from infiltrating inside while maintaining optical characteristics. Thus, the optical element 1 prevents yellowing of the resin base 10 while maintaining optical characteristics.

In the optical element 1,the film thickness difference of the second protection layer 23 is 10% or smaller Accordingly, since the uniformity of the thickness of the second protection layer 23 is improved, the variation in the function of the second protection layer 23 is reduced. Thus, the optical element 1 further reliably prevents yellowing of the resin base 10 while maintaining the optical characteristics.

A film formed by ADL may be used as the second protection layer 23 in the optical element 1. As a result, the second protection layer 23 is a thinner film. Thus, if the optical element 1 is thinner, the optical element 1 prevents the resin base from yellowing of the resin base 10 while maintaining optical characteristics.

The optical element 1 may include an effective region of the optical element 1 in the region A1. The effective region is a region on which light is incident or reflected. The incident light passes through the effective region. Since the optical element 1 includes the first protection layer 21 and the second protection layer 23 in the first region A1, the optical element 1 reliably prevents the resin base 10 from yellowing and film lifting in the effective region. Thus, since the optical element 1 reduces obstructive factors of light incident on the region A1 and reflected on the region A1, optical characteristics of the optical element improves.

As described above, since the optical element 1 reliably prevents the resin base 10 from yellowing and film lifting, the optical element 1 is suitably used for various optical elements using a resin base.

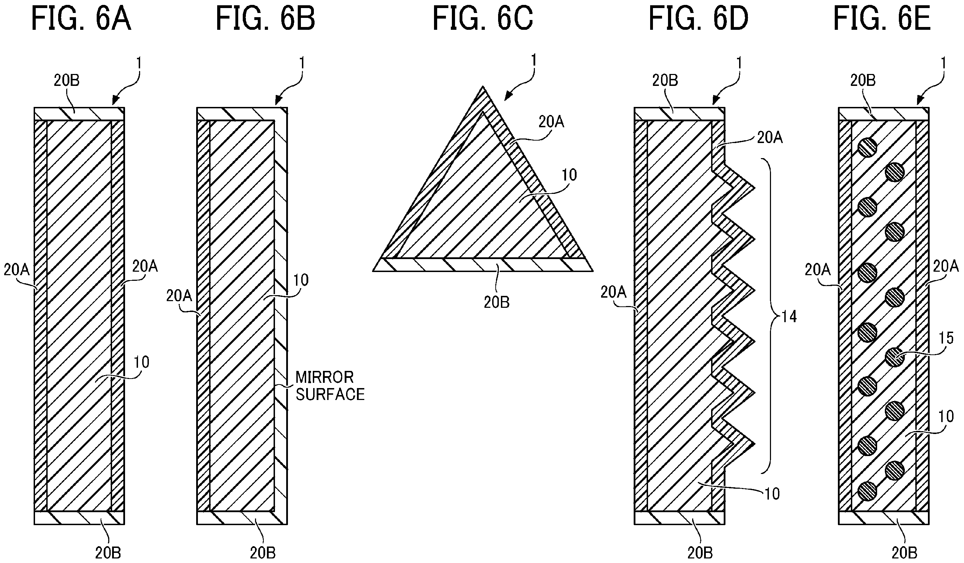

FIGS. 6A to 6E are cross-sectional views of modifications of the optical element 1. The multiple films 20A and the film 20B have a multilayer structure as illustrated in FIGS. 3A and 4. However, the multiple films 20A and the film 20B are illustrated as a single layer for the sake of convenience. Modifications of the multiple films 20 A illustrated in FIGS. 6A to 6E are examples and are not limited thereto.

As illustrated in FIG. 6A, the optical element 1 may be used as an optical window for passing through light. In the optical element 1 illustrated in FIG. 6A, the multiple films 20A are provided on both surfaces of the longer sides (both left and right sides in the drawing) of the resin base 10, and the film 20B are provided on both surfaces of the shorter sides (both upper and lower sides in the drawing) of the resin base 10.

As illustrated in FIG. 6B, the optical element 1 may be used as a mirror, that is, an optical deflector, for changing the propagation direction of light. In the optical element 1 illustrated in FIG. 6B, the multiple films 20A are provided on one surface of the longer side (left side in the drawing) of the resin base 10, the mirror surface is provided on another surface of the longer side (right side in the drawing), and the film 20B is provided on both surfaces of the shorter sides (both upper and lower sides in the drawing) of the resin base 10.

As illustrated in FIG. 6C, the optical element 1 may be used as an optical prism having a shape of a triangular prism. In the optical element 1 illustrated in FIG. 6C, the film 20B may be provided on one surface of the bottom side (e.g., bottom surface in the drawing), and the multiple film 20B may be provided on the remaining surfaces (e.g., surfaces other than the bottom surface) of the resin base 10. The shape of the prism may be a polygonal shape other than a shape triangular prism.

As illustrated in FIG. 6D, the optical element 1 may be used as a diffractive optical element (DOE) having a fine structure 14. Herein, the fine structure is a structure causing diffraction of light. In the optical element 1 illustrated in FIG. 6D, the multiple films 20A may be provided on a surface of a longer side (i.e., the left side in the drawing) and the other surface having the fine structure (i.e., the right side in the drawing), and the film 20B may be provided on both surfaces of the shorter sides (i.e., both upper and lower sides in the drawing) of the resin base 10. The fine structure 14 is not limited thereto and may use a general fine structure as long as the general fine structure diffracts incident light.

As illustrated in FIG. 6E, the optical element 1 may be used as a fluorescent element including fluorescent material 15. In the optical element 1 illustrated in FIG. 6E, the multiple films 20A and the film 20B may be provided in the same manner as in the optical element 1 illustrated in FIG. 6A.

In the present embodiment, the resin base 10 may have various shapes such as an aspherical lens, a spherical lens, a one-sided concave lens, and a both-sided convex lens other than the shape illustrated in FIGS. 1 and 2.

In the present embodiment, the first protection layer 21, the antireflection layer 22, and the second protection layer 23 are provided on the resin base 10. However, the antireflection layer 22 may not be provided. Depending on the antireflection performance required for the optical element 1, the antireflection layer 22 may be omitted.

Distance Measurement Apparatus

A distance measurement apparatus to which applies the optical element 1 described above will be described. The distance measurement apparatus includes a projection unit including a light source that emits light to an object, a detection unit including a light receiving unit that receives reflected light from the object, and a calculation unit (i.e., circuitry) that calculates a distance to the object based on signals from the light projection unit and the detection unit.

The light projection unit may be used as a light projection device. In this case, the light projection device includes a light emitter that emits light and the optical element 1 through which the light emitted from the light emitter passes.

The detection unit may be used as a light receiving device. In this case, the light receiving device includes the optical element 1 and the light receiving element that receives light passed through the optical element 1.

The distance measurement apparatus to which the optical element 1 according to the present embodiment is applied is provided in a vehicle such as an automobile or a mobile object such as a drone.

First Aspect

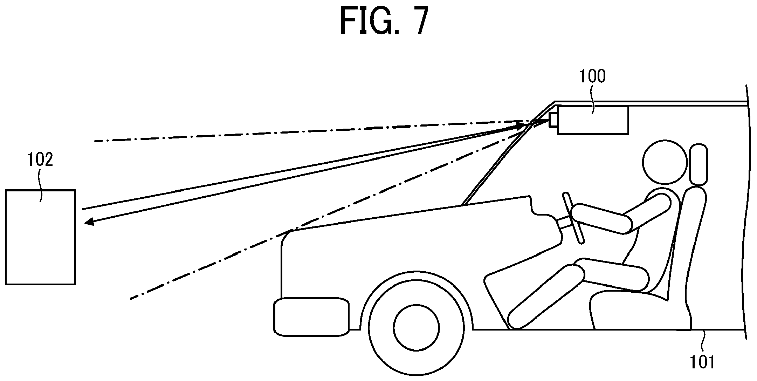

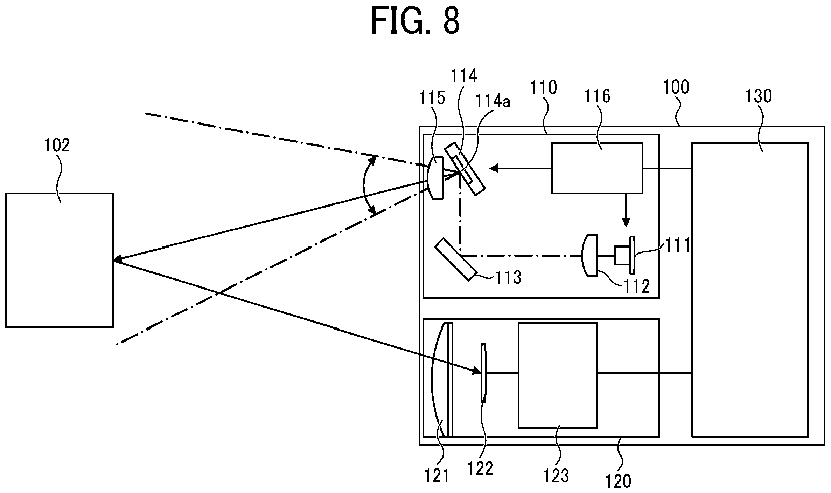

One aspect of the distance measurement apparatus to which the optical element 1 is applied will be described in detail with reference to FIGS. 7 and 8. The distance measurement apparatus measures a distance to an object, and is used as a LiDAR device provided in an automobile.

FIG. 7 is a schematic illustration of an automobile including a LiDAR device as one example of the distance measurement apparatus. FIG. 8 is a schematic illustration of the LiDAR device.

As illustrated in FIG. 7, the LiDAR device 100 is mounted on an automobile 101 (a mobile object) and measures the distance to an object 102 by optically scanning the object in a scanning direction and receiving light reflected from the object 102 present in the object direction. Herein, the automobile 101 is an example of "vehicle". In addition to a vehicle, the LiDAR device 100 is mounted on a mobile object such as a drone.

As illustrated in FIG. 8, the LiDAR device 100 includes a light projection unit 110, a light detection unit 120 corresponding to detection unit or light receiving device, and distance measurement circuitry 130.

The light projection unit 110 includes a light source 111, a collimating lens 112, a plane mirror 113, a movable device 114, and a light projection lens 115. In the light projection unit 110, the light source 111, the collimating lens 112, and the plane mirror 113 constitute an incident optical system, and the projection lens 115 constitutes a projection optical system. The collimating lens 112, the plane mirror 113, and the projection lens 115 may include the optical element 1 according to the present embodiment described above.

The light detection unit 120 includes a condenser lens 121, an image sensor 122, and signal processing circuitry 123. The condenser lens 121 may include the optical element 1 according to the present embodiment described above.

Laser light emitted from the light source 111 passes through the incident optical system including a collimating lens 112 which converts divergent light into substantially parallel light and a plane mirror 113, and is deflected to scan in one or two axial directions by a movable device 114 having a reflection surface 114a. The substantially parallel light deflected by the movable device 114 reaches the object 102 ahead of the LiDAR device 100 via a projection lens 115 that serves as a projection optical system. The control device 116 controls the light source 111 and the movable device 114 to drive. The light detection unit 120 detects the light reflected by the object 102. More specifically, the reflected light passes through, for example, a condenser lens 121 that serves as an optical system for receiving and detecting incident light, and is received by an image sensor 122. The image sensor 122 outputs a detected signal to signal processing circuitry 123. The signal processing circuitry 123 performs predetermined processing such as binarization or noise processing on the received detected signal, and outputs the result to distance measurement circuitry 130.

The distance measurement circuitry 130 determines the presence or absence of the object 102 according to a time difference between a timing at which the light source 111 emits the laser light and a timing at which the light detection unit 120 receives the laser light, or a phase difference for each pixel of the image sensor 122 that receives the laser light, and calculates distance information with respect to the object 102.

Since the movable device 114 having the reflection surface 114a is less likely to be damaged (i.e., higher durability) compared to a polygon mirror and is smaller in size, thus, a smaller LiDAR device having higher durability is provided. Such a LiDAR device is attached to, for example, a vehicle, an aircraft, a ship, or a robot, and determines whether an obstacle or object is present or absent, or measures distance to the obstacle or the object by optically scanning within a predetermined range. The installation position of the LiDAR device 100 is not limited to an upper front portion of the mobile object 101 such as a vehicle (FIG. 7), and the LiDAR device 100 may be mounted at a side surface or a rear portion of the mobile object 101 such as a vehicle.

The LiDAR device 100 is described as an example of the distance measurement apparatus, but is not limited thereto. The distance measurement apparatus may be any device that performs optical scanning by controlling the movable device 114 having the reflection surface 114a by the control device 116 and receives reflection light by the photodetector to measure the distance to the object 102.

The present disclosure is similarly applied to, for example, a biometric authentication device, a security sensor, or a component of a three-dimensional scanner. In the biometric authentication device, information on an object, such as shape, is calculated by distance obtained by optical scanning of a hand or a face, and the object is recognized by referring to the calculation result and a record. In the security sensor, an intruder is recognized by optically scanning in a target range. In the component of a three-dimensional scanner, an object information such as a shape is calculated by distance obtained by optical scanning, and the calculation result is output as three-dimensional data.

By using the optical element according to the present embodiment in a distance measurement apparatus, a distance measurement apparatus having a higher reliability for a longer period is provided.

Second Aspect

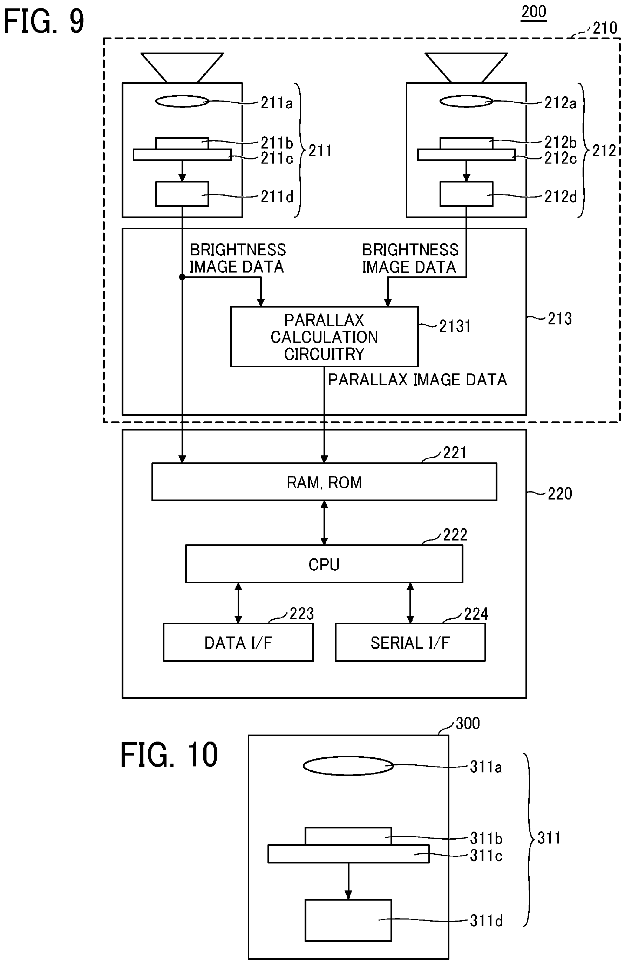

Another aspect of the distance measurement apparatus to which the optical element 1 described above is applied will be described in detail with reference to FIG. 9. The distance measurement apparatus includes an imaging unit and an image analysis unit, and measures a distance to an object. The imaging unit is an example of a light receiving device.

FIG. 9 is a diagram of a configuration of the distance measurement apparatus. As illustrated in FIG. 9, the distance measurement apparatus 200 includes an imaging unit 210 and an image analysis unit 220.

The imaging unit 210 includes a stereo camera including an imaging subunit 211 and an imaging subunit 212 as imaging mean. The imaging subunit 211 and the imaging subunit 212 are the same. The imaging subunits 211 and 212 may include imaging lenses 211a and 212a, image sensors 211b and 212b, sensor substrates 211c and 212c, and signal processing circuitry 211d and 212d, respectively. Each of the image sensors 211b and 212b has a two-dimensional array of light receiving element. The sensor substrates 211c and 212c include the image sensors 211b and 212b, respectively. Each of the signal processing circuitry 211d and 212d generates image data by converting an analog electric signal output from the sensor substrate 211c and 212c into a digital electric signal, and outputs the image data. Herein, the analog electric signal corresponds to the amount of light received by each light receiving element on the image sensors 211c and 212c. The imaging unit 210 outputs brightness image data and parallax image data. The imaging lenses 211a and 212a included in the imaging subunits 211 and 212 may include the optical element 1 according to the present embodiment described above.

The imaging unit 210 includes a processing hardware unit 213 including a field-programmable gate array (FPGA). The processing hardware unit 213 includes parallax calculation circuitry 2131 as a parallax image information generator that calculates a parallax value of a corresponding image portion between images taken by the respective imaging subunits 211 and 212 to obtain a parallax image from brightness image data output from the respective imaging subunits 211 and 212.

Herein, the parallax value is obtained by setting one image taken by the imaging subunit 211 or the imaging subunit 212 as a reference image and by setting the other image as a comparative image, and calculating the amount of positional deviation of an image portion on the comparative image with respect to an image portion on the reference image corresponding to the same point in the imaging region as the disparity value of the image portion. By using the principle of triangulation, the distance to the same point in the imaging region corresponding to the image portion is calculated from the parallax value.

The image analysis unit 220 includes a storage unit 221 such as a RAM and a ROM for storing the brightness image data and the parallax image data output from the imaging unit 210, a central processing unit (CPU) 222 for executing a computer program for performing recognition processing of an identification target, parallax calculation control, an interface (I/F) 223, and a serial I/F 224.

The FPGA constituting the processing hardware unit 213 performs processing requiring real-time performance on image data, for example, gamma correction, distortion correction (parallelization of left and right taken images), generates information on a parallax image by parallax calculation by block matching, and writes the information in the RAM of the image analysis unit 220. The CPU 222 of the image analysis unit 220 controls the image sensor controllers of the imaging subunits 211 and 212 and the entire image processing board, loads a program for detecting a three-dimensional shape such as a road surface and detecting various objects from the ROM, performs various processes using the brightness image and parallax image stored in the RAM, and outputs the processing results from the I/F 223 and serial I/F 224 to the outside. The data output to the outside is used as input data for controlling various devices such as a vehicle or a robot on which the distance measurement apparatus 200 is mounted (e.g., brake control, speed control, and warning control).

A distance measurement apparatus 200 as an integrated apparatus may include the imaging unit 210 and the image analysis unit 220.

Since the imaging unit 210 uses the optical element 1 according to the present embodiment as the imaging lenses 211a and 212a, a highly reliable image is generated over a longer period. In addition, since the distance measurement apparatus 200 uses the optical element 1 according to the present embodiment is used as the imaging lenses 211a and 212a, highly reliable image data is obtained over a longer period and highly reliable distance measurement is performed.

Image Device

In the second aspect illustrated in FIG. 9, the stereo camera including the image unit 210 as the light receiving device is described. However, the optical element according to the present embodiment may be applied to an imaging device having an imaging lens and an image sensor. Herein, the imaging device is an example of a light receiving device. Another aspect of the light receiving device to which the optical element 1 is applied will be described in detail with reference to FIG. 10.

As illustrated in FIG. 10, the imaging device 300 may include an imaging lens 311a, an image sensor 311b in which light receiving elements are two-dimensionally arranged, a sensor board 311c including the image sensor 311b, signal processing circuitry 311d to produce image data to output. The image data is obtained by converting an analog electrical signal from the sensor board 311c (i.e., the analog electric signal corresponds to the amount of light received by each light receiving element on the image sensor 311b) into a digital electric signal.

The imaging device 300 outputs image data output from the signal processing circuitry 311d.

The imaging lens 311a of an imaging unit 311 may include the optical element 1 according to the present embodiment. The imaging device 300 may include the optical window, the mirror, the prism, and the diffraction optical element according to the present embodiments.

Since the imaging device 300 uses the optical element 1 according to the present embodiment as an optical lens, the imaging device including the optical lens is lightweight and has durability, The imaging device 300 is suitably applied to a camera mounted on an infrastructure monitoring and inspection drone such as a bridge pier, a camera for a surgical robot, a camera for an endoscope, a camera for a head-mounted display, and generates image data with higher reliability over a long period.

The embodiments described above are examples and the present invention is not limited to the embodiments described above. The embodiments described above can be implemented in other various forms, and various combinations, omissions, replacements, changes, and the like can be made without departing from the scope of the invention. These embodiments and modifications thereof are included in the scope and spirit of the invention, and are also included in the invention described in the claims and the equivalents thereof.

Aspects of the present invention are as follows.

In a first aspect, an optical element (1) includes a resin base (10); and multiple films (20A) on a surface of the resin base (10), the multiple films (20A) including: a first film (21) having a first defect density; and a second film (23) over the first film, the second film (23) having a second defect density smaller than the first defect density of the first film (21).

In a second aspect, in the optical element (1) according to the first aspect, the first film (21) is on a first region (e.g., A1) of a portion of the surface of the resin base (10), and the second film (23) is on the first region and a second region excluding the first film (21).

In a third aspect, In the optical element (1) according to the second aspect, the first region (e.g., A1) includes multiple subregions (e.g., A1).

In a fourth aspect, in the optical element (1) according to any one of the first aspect to the third aspect, the multiple films (20A) further include: an antireflection layer (22) on at least a partial region between the first film (21) and the second film (23).

In a fifth aspect, in the optical element (1) according to any one of the first aspect to the fourth aspect, the second film (23) contains at least one member selected from the group consisting of $Al_2O3$, $HfO_2$, $SiO_2$, SiN, and $TiO_x$.

In a sixth aspect, in the optical element (1) according to any one of the first aspect to the fifth aspect, the second film (23) has a thickness of 10 nm to 40 nm.

In a seventh aspect, in the optical element (1) according to any one of the first aspect to the sixth aspect, the second film (23) contains $Al_2O_3$ and has a refractive index greater than or equal to 1.630 and smaller than or equal to 1.670.

In an eighth aspect, in the optical element (1) according to any one of the first aspect to the seventh aspect, the second film (23) has a film thickness uniformity smaller than or equal to 10%, the film thickness uniformity expressed as below:

$$\text{film thickness uniformity [\%]} = (\text{maximum film thickness} - \text{minimum film thickness}) / (\text{maximum film thickness} + \text{minimum film thickness}) \times 100.$$

In a ninth aspect, in the optical element (1) according to any one of the first aspect to the eighth aspect, the second film (23) is formed by atomic layer deposition.

In a tenth aspect, in the optical element (1) according to the second aspect, the first region (e.g., A1) includes an effective region of the optical element (1).

In an eleventh aspect, a light receiving device (120) includes: the optical element (1) according to any one of the first aspect to the tenth aspect; and a light receiving element (122) to receive light having passed through or reflected from the optical element (e.g., 1).

In a twelfth aspect, a distance measurement apparatus (e.g., 100) includes: a light projection unit (110) including a light source (111) to emit light, the light projection unit (110) to project light to an object (102); a detection unit (120) including a light receiving element (122) to receive reflection light reflected from the object (102); and distance measurement circuitry (123) to calculate a distance to the object (102) based on signals from the light projection unit (110) and the detection unit (120), and at least one of the light projection unit (110) and the detection unit (120) includes the optical element (e.g., 1) according to any one of the first aspect to the tenth aspect.

In a thirteenth aspect, a mobile object (101) includes: the light receiving device (120) according to the eleventh aspect.

In a fourteenth aspect, a mobile object (101) includes: the distance measurement apparatus (e.g., 100) according to the twelfth aspect.

In a fifteenth aspect, a manufacturing method of an optical element (1) includes: forming a first film (21) having a first defect density on a resin base (10); and forming a second film (23) having a second defect density lower than the first defect density of the first film (21) after forming the first film (21).

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above. Each of the functions of the described embodiments may be implemented by one or more processing circuits or circuitry. Processing circuitry includes a programmed processor, as a processor includes circuitry. A processing circuit also includes devices such as an application specific integrated circuit (ASIC), a digital signal processor (DSP), a field programmable gate array (FPGA), and conventional circuit components arranged to perform the recited functions.

**Claims**

1. An optical element (1) comprising:

   a resin base (10); and
   multiple films (20A) on a surface of the resin base (10), the multiple films (20A) including:

      a first film (21) having a first defect density; and
      a second film (23) over the first film, the second film (23) having a second defect density smaller than the first defect density of the first film (21).

2. The optical element (1) according to claim 1,
   wherein the first film (21) is in a first region (A1) of a portion of the surface of the resin base (10),
   the second film (23) is on the first region and a second region (A5-1) excluding the first film (21).

3. The optical element (1) according to claim 2,

wherein the first region (A1) includes multiple subregions (A1).

4. The optical element (1) according to claim 1,
   wherein the multiple films (20A) further include an antireflection layer (22) at least between the first film (21) and the second film (23).

5. The optical element (1) according to claim 1,
   wherein the second film (23) contains at least one member selected from the group consisting of $Al_2O3$, $HfO_2$, $SiO_2$, SiN, and $TiO_x$.

6. The optical element (1) according to claim 1,
   wherein the second film (23) has a thickness of 10 nm to 40 nm.

7. The optical element (1) according to claim 1,
   wherein the second film (23) contains $Al_2O_3$ and has a refractive index greater than or equal to 1.630 and smaller than or equal to 1.670.

8. The optical element (1) according to claim 1,
   wherein the second film (23) has a film thickness uniformity smaller than or equal to 10%, the film thickness uniformity expressed as below:

$$\text{film thickness uniformity } [\%] =$$

$$(\text{maximum film thickness} - \text{minimum film thickness}) /$$

$$(\text{maximum film thickness} + \text{minimum film thickness}) \times 100.$$

9. The optical element (1) according to claim 1,
   wherein the second film (23) is formed by atomic layer deposition.

10. The optical element (1) according to claim 2,
    wherein the first region (A1) includes an effective region of the optical element (1).

11. A light receiving device (120) comprising:

    the optical element (1) according to any one of claims 1 to 10; and
    a light receiving element (122) configured to receive light having passed through or reflected from the optical element (1).

12. A distance measurement apparatus (100) comprising:

    a light projection unit (110) including a light source (111) configured to emit light, the light projection unit (110) configured to project the light to an object (102);
    a detection unit (120) including a light receiving element (122) configured to receive reflection light reflected from the object (102); and
    distance measurement circuitry (123) configured to calculate a distance to the object (102) based on signals from the light projection unit (110) and the detection unit (120),
    wherein at least one of the light projection unit (110) and the detection unit (120) includes the optical element (1) according to any one of claims 1 to 10.

13. A mobile object (101) comprising:
    the light receiving device (120) according to claim 11.

14. A mobile object (101) comprising the distance measurement apparatus (100) according to claim 12.

15. An optical element manufacturing method comprising:

    forming a first film (21) having a first defect density on a resin base (10); and

forming a second film (23) having a second defect density lower than the first defect density of the first film (21) after forming the first film (21).

# FIG. 1

# FIG. 2

# FIG. 3A

23
22
21
20A
10

# FIG. 3B

23
21
20A
10

# FIG. 4

23
20B
10

# FIG. 5
COMPARATIVE EXAMPLE

23
10

FIG. 6A

FIG. 6B

FIG. 6C

FIG. 6D

FIG. 6E

MIRROR SURFACE

FIG. 7

# FIG. 8

EP 4 124 893 A1

# FIG. 9

BRIGHTNESS IMAGE DATA

BRIGHTNESS IMAGE DATA

PARALLAX CALCULATION CIRCUITRY ~2131

~213

PARALLAX IMAGE DATA

RAM, ROM ~221

~220

CPU ~222

DATA I/F ~223

SERIAL I/F ~224

# FIG. 10

Europäisches
Patentamt

European
Patent Office

Office européen
des brevets

# EUROPEAN SEARCH REPORT

Application Number

**EP 22 18 6547**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/410208 A1 (THOTHADRI MANIVANNAN [US] ET AL) 31 December 2020 (2020-12-31) | 1-10,15 | INV. G02B1/14 |
| A | * paragraphs [0060] – [0112]; figure 1 * | 11-14 | G02B27/01 |
| X | US 2009/098409 A1 (YAMADA KAZUHIRO [JP] ET AL) 16 April 2009 (2009-04-16) * paragraphs [0012], [0017] – [0038]; figure 1 * | 1-15 | |
| X | KR 102 247 137 B1 (SK INNOVATION CO LTD [KR]; SK IE TECH CO LTD [KR]) 4 May 2021 (2021-05-04) | 1-10,15 | |
| A | * paragraphs [0027], [0062], [0063], [0106] – [0111]; figures 4, 5 * | 11-14 | |
| A,D | JP 5 250851 B2 (KONICA MINOLTA HOLDINGS INC; KONICA MINOLTA INC) 31 July 2013 (2013-07-31) * the whole document * | 2,3,10 | |
| A | EP 2 803 944 A2 (RICOH CO LTD [JP]) 19 November 2014 (2014-11-19) * paragraphs [0020] – [0031]; figures 1, 2 * | 11-14 | TECHNICAL FIELDS SEARCHED (IPC)  G02B |

The present search report has been drawn up for all claims

| Place of search | Date of completion of the search | Examiner |
|---|---|---|
| Munich | 14 December 2022 | Zwerger, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 6547

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2022

| Patent document cited in search report | | | Publication date | Patent family member(s) | | | Publication date |
|---|---|---|---|---|---|---|---|
| US 2020410208 | A1 | | 31-12-2020 | CN | 114026627 | A | 08-02-2022 |
| | | | | CN | 114041181 | A | 11-02-2022 |
| | | | | CN | 114096894 | A | 25-02-2022 |
| | | | | CN | 114223025 | A | 22-03-2022 |
| | | | | EP | 3990954 | A1 | 04-05-2022 |
| | | | | EP | 3990955 | A1 | 04-05-2022 |
| | | | | JP | 2022538995 | A | 07-09-2022 |
| | | | | JP | 2022539325 | A | 08-09-2022 |
| | | | | JP | 2022539326 | A | 08-09-2022 |
| | | | | JP | 2022539687 | A | 13-09-2022 |
| | | | | KR | 20220024961 | A | 03-03-2022 |
| | | | | KR | 20220024963 | A | 03-03-2022 |
| | | | | KR | 20220024964 | A | 03-03-2022 |
| | | | | KR | 20220024969 | A | 03-03-2022 |
| | | | | TW | 202107241 | A | 16-02-2021 |
| | | | | US | 2020408956 | A1 | 31-12-2020 |
| | | | | US | 2020408957 | A1 | 31-12-2020 |
| | | | | US | 2020408961 | A1 | 31-12-2020 |
| | | | | US | 2020410208 | A1 | 31-12-2020 |
| | | | | WO | 2020263628 | A1 | 30-12-2020 |
| | | | | WO | 2020263631 | A1 | 30-12-2020 |
| | | | | WO | 2020263632 | A1 | 30-12-2020 |
| | | | | WO | 2020263633 | A1 | 30-12-2020 |
| US 2009098409 | A1 | | 16-04-2009 | CN | 101424749 | A | 06-05-2009 |
| | | | | JP | 5049731 | B2 | 17-10-2012 |
| | | | | JP | 2009098305 | A | 07-05-2009 |
| | | | | KR | 20090038363 | A | 20-04-2009 |
| | | | | US | 2009098409 | A1 | 16-04-2009 |
| KR 102247137 | B1 | | 04-05-2021 | CN | 113549240 | A | 26-10-2021 |
| | | | | JP | 2021172087 | A | 01-11-2021 |
| | | | | KR | 102247137 | B1 | 04-05-2021 |
| | | | | US | 2021333440 | A1 | 28-10-2021 |
| JP 5250851 | B2 | | 31-07-2013 | JP | 5250851 | B2 | 31-07-2013 |
| | | | | JP | WO2008149631 | A1 | 19-08-2010 |
| | | | | WO | 2008149631 | A1 | 11-12-2008 |
| EP 2803944 | A2 | | 19-11-2014 | EP | 2803944 | A2 | 19-11-2014 |
| | | | | JP | 6202367 | B2 | 27-09-2017 |
| | | | | JP | 2014222429 | A | 27-11-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5250851 B